# EUROPÄISCHE PATENTSCHRIFT

(11) **EP 1 561 620 B1**
(45) Veröffentlichungstag und Bekanntmachung des Hinweises auf die Patenterteilung: **03.12.2008**
(21) Anmeldenummer: 05000893.7
(22) Anmeldetag: 18.01.2005
(51) Int. Cl.: B60J 7/043

(54) **Mechanismus für ein Schiebedach**
Mechanism for a sliding roof
Mécanisme pour un toit glissant

(30) Priorität: 09.02.2004 DE 202004001916 U
(43) Veröffentlichungstag der Anmeldung: 10.08.2005
(73) Patentinhaber: ArvinMeritor GmbH, 63128 Dietzenbach (DE)
(72) Erfinder: Grimm, Rainer, 60559 Frankfurt/Main (DE); Becher, Thomas, 63110 Rodgau (DE); Wagner, Richard, 55129 Mainz (DE)
(74) Vertreter: Sties, Jochen

(56) Entgegenhaltungen:
- DE-A1- 3 715 268
- US-A- 5 632 523
- US-A- 5 765 908
- US-A1- 2002 053 817

## Beschreibung

Die Erfindung betrifft einen Mechanismus für ein Schiebedach.

Bei Kraftfahrzeugen werden häufig Schiebedächer eingebaut, die aus einem oder mehreren bewegbaren Deckeln bestehen, die aus einer geschlossenen Stellung, in der sie eine Dachöffnung verschließen, über eine Vielzahl von Zwischenstellungen in eine geöffnete Stellung überführt werden können, in der sie die Dachöffnung freigeben. Bei den meisten Mechanismen wird zum Verstellen der Deckel mindestens ein Schlitten verwendet, der in der Führungsschiene verschiebbar ist. Durch das Zusammenwirken des Schlittens mit der Führungsschiene wird zum einen eine Hubbewegung erzeugt, mittels welcher der entsprechende Deckel nach oben verstellt werden kann, und zum anderen eine Verschiebebewegung. Hierzu sind Kulissenführungen erforderlich, die mit mindestens einer Führung in der Führungsschiene zusammenwirken. Nachteilig bei diesen Konstruktionen ist, daß die Führungen in der Führungsschiene zum einen über den gesamten Verstellweg des Deckels verlaufen müssen und zum anderen Bauraum beanspruchen. Dies ist insbesondere deshalb kritisch, da eine große Bauhöhe des Mechanismus zu einer Verringerung der Kopffreiheit im Fahrzeug führt.

Aus der DE 37 15 268 ist ein Mechanismus bekannt, der ohne spezielle Führungen innerhalb der Führungsschiene auskommt. Statt dessen werden zwei Schlitten in der Führungsschiene verwendet, von denen einer in der Führungsschiene arretierbar ist. Nachteilig bei dieser bekannten Konstruktion ist, daß nur eine sehr kleine Hubbewegung für den Deckel erzielbar ist.

Aus der US-A-5,765,908 ist ein Mechanismus bekannt, bei dem in der Führungsschiene eine Hubkulisse für einen Deckelhalter eines Schiebedachdeckels ausgebildet ist. Es ist ein Hubschlitten vorgesehen, der entlang der Führungsschiene verstellt werden kann.

Die Aufgabe der Erfindung besteht darin, einen Mechanismus für ein Schiebedach zu schaffen, der keine speziellen Führungen innerhalb der Führungsschiene erfordert, dennoch eine große Hubbewegung für den Deckel bereitstellen kann.

Zu diesem Zweck ist erfindungsgemäß ein Mechanismus für ein Schiebedach vorgesehen, mit mindestens einer Führungsschiene, einem Hubschlitten, der in der Führungsschiene verschiebbar ist, einem Führungsschlitten, der in der Führungsschiene in einer Ausgangsstellung arretierbar ist und nach Lösen der Arretierung in der Führungsschiene verschiebbar ist, und einem Deckelhalter, der mit dem Hubschlitten und dem Führungsschlitten so gekoppelt ist, daß er zwischen einer geschlossenen Stellung und einer geöffneten Stellung verstellbar ist, wobei der Führungsschlitten und der Deckelhalter durch eine Führungs-Kulissenführung miteinander verbunden sind. Beim erfindungsgemäßen Mechanismus werden die Funktionen, die bei herkömmlichen Mechanismen von den Führungen der Führungsschiene übernommen wurden, nun vom Führungsschlitten bereitgestellt. Die Führungskulisse ist jedoch nicht stationär in der Führungsschiene angebracht, wie dies bei einer herkömmlichen Führung der Fall ist, sondern mit dem Führungsschlitten in der Führungsschiene verstellbar. Dies ermöglicht, den Führungsschlitten beim Öffnen des Deckels vollständig aus dem geöffneten Dachbereich herauszubewegen. Insgesamt ergibt sich eine sehr geringe Bauhöhe, was eine große Kopffreiheit in dem mit dem entsprechenden Schiebedachsystem ausgestatteten Fahrzeug ermöglicht.

Vorteilhafte Ausgestaltungen der Erfindung ergeben sich aus den Unteransprüchen.

Die Erfindung wird nachfolgend anhand einer bevorzugten Ausführungsform beschrieben, die in den beigefügten Zeichnungen dargestellt ist. In diesen zeigen:
- Figur 1 eine schematische perspektivische Ansicht eines Fahrzeugdachs;
- Figur 2 in einer teilgeschnittenen Seitenansicht entlang der Ebene II-II von Figur 1 den Mechanismus in einer Ausgangsstellung;
- Figur 3 in einer Ansicht entsprechend derjenigen von Figur 2 den Mechanismus in einem teilgeöffneten Zustand; und
- Figur 4 in einer Ansicht entsprechend derjenigen von Figur 2 den Mechanismus einer vollständig geöffneten Stellung.

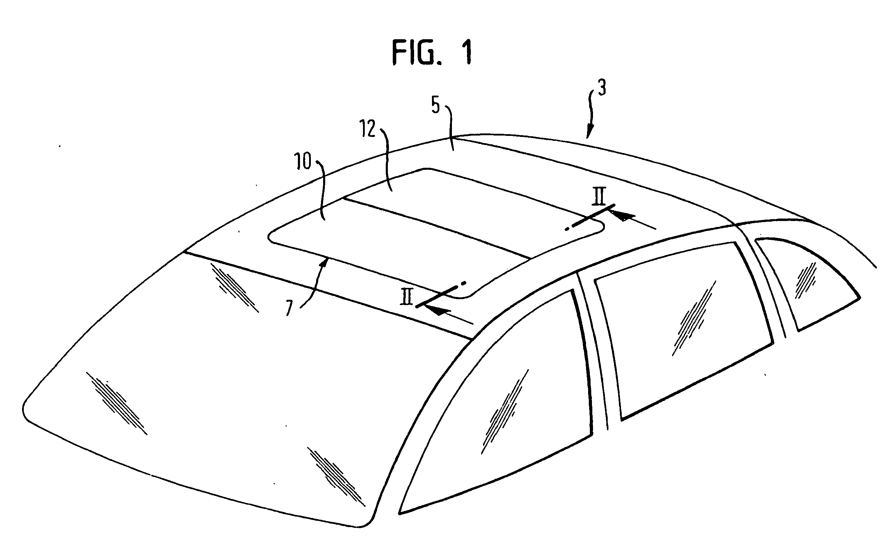

In Figur 1 ist schematisch ein Fahrzeugdach 3 gezeigt, welches eine Dachhaut 5 aufweist. In der Dachhaut 5 ist eine Dachöffnung 7 vorgesehen, die von zwei Deckeln 10, 12 eines Schiebedachsystems verschlossen sind. Die Deckel können aus einem optisch transparenten Material oder auch einem lichtundurchlässigen Material bestehen und aus der in Figur 1 gezeigten, geschlossenen Stellung bezüglich des Fahrzeugs nach hinten, also bezogen auf Figur 1 nach rechts oben, hin zu einer geöffneten Stellung verstellt werden.

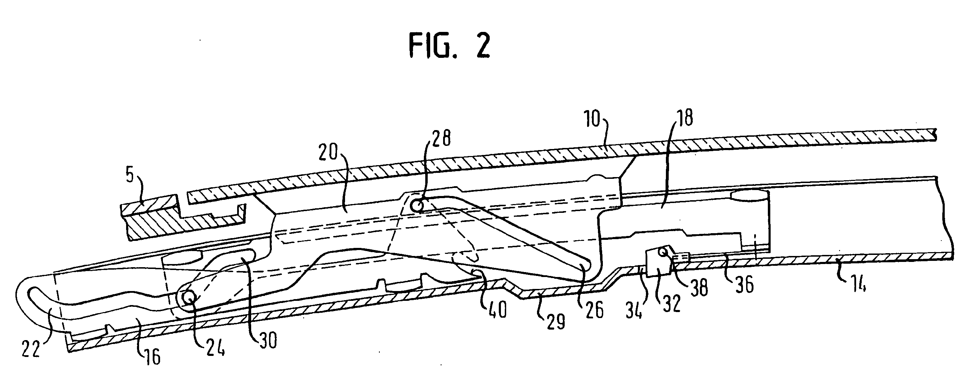

In Figur 2 sind in einer Seitenansicht die wesentlichen Bauteile des Schiebedachsystems gezeigt, insbesondere des Mechanismus zur Verstellung eines der Deckel, hier des Deckels 10. Der Mechanismus weist eine Führungsschiene 14 auf, die sich allgemein in Fahrzeuglängsrichtung entlang dem Rand der Dachöffnung 7 erstreckt. Auch auf der anderen Seite der Dachöffnung ist eine solche Führungsschiene vorgesehen. In der Führungsschiene ist ein Hubschlitten 16 verschiebbar angebracht. Ebenfalls in der Führungsschiene 14 ist ein Führungsschlitten 18 angeordnet. Mit dem Hubschlitten 16 und dem Führungsschlitten 18 ist ein Deckelhalter 20 gekoppelt, der fest am Deckel 10 angebracht ist.

Der Hubschlitten 16 ist mit dem Deckelhalter 20 durch eine Löse-Kulissenführung und eine Hub-Kulissenführung gekoppelt. Die Löse-Kulissenführung besteht aus einer im Hubschlitten 16 vorgesehenen Lösekulisse 22, in die ein Lösezapfen 24 eingreift, der in Fahrzeuglängsrichtung gesehen am vorderen Ende des Deckelhalters 20 angebracht ist. Die Lösekulisse 22 erstreckt sich, von hinten nach vorne betrachtet, zunächst parallel zur Richtung der Führungsschiene 14, dann um einen kleinen Betrag nach oben, dann wieder parallel zur Richtung der Führungsschiene 14 und schließlich in einem gekrümmten Abschnitt weiter nach oben. Die Hub-Kulissenführung besteht aus einer Hubkulisse 26, die im Deckelhalter 20 ausgebildet ist. Die Hubkulisse 26 erstreckt sich, betrachtet von vorne nach hinten, zunächst parallel zur Richtung der Führungsschiene 14 und dann abfallend nach unten. In die Hubkulisse 26 greift ein Hubzapfen 28 ein, der am in Fahrzeuglängsrichtung gesehen hinteren Ende des Hubschlittens 16 an diesem angebracht ist. Die Führungsschiene 14 ist mit einer Vertiefung 29 versehen, in die der untere Abschnitt des Deckelhalters 20 eintauchen kann, in welchem die Hubkulisse 26 endet.

Am Hubschlitten 16 greift ein (nicht dargestelltes) Verstellmittel an, beispielsweise ein schubfestes Kabel, das in an sich bekannter Weise von einem Antriebsmotor verstellt werden kann. Auf diese Weise kann der Hubschlitten 16 translatorisch entlang der Führungsschiene 14 verschoben werden.

Der Führungsschlitten 18 ist mit dem Deckelhalter 20 durch eine Führungs-Kulissenführung gekoppelt. Die Führungs-Kulissenführung weist eine Führungskulisse 30 auf, die am in Fahrzeuglängsrichtung gesehen vorderen Ende des Führungsschlittens 18 ausgebildet ist. Die Führungskulisse 30 erstreckt sich, betrachtet von vorne nach hinten, zunächst schräg ansteigend und am Ende parallel zur Richtung der Führungsschiene 14. In die Führungskulisse 30 greift ein Führungszapfen ein, der gleichzeitig der Lösezapfen 24 ist, mittels dem der Deckelhalter 20 mit der Lösekulisse 22 des Hubschlittens 16 gekoppelt ist. An seinem in Fahrzeuglängsrichtung betrachtet hinteren Ende ist der Führungsschlitten 18 mit einem Riegel 32 versehen, der mit einer Aussparung 34 in der Führungsschiene 14 zusammenwirken kann. Der Riegel 32 ist am Führungsschlitten 18 mittels einer Blattfeder 36 angebracht, die ihn in die in Figur 2 gezeigte Position beaufschlagt, also in die Aussparung 34 hinein. Am Riegel 32 ist ein Entriegelungszapfen 38 ausgebildet, mit dem eine als Nut ausgebildete Entriegelungskulisse 40 zusammenwirken kann, die an dem in Fahrzeuglängsrichtung betrachtet hinteren Ende des Hubschlittens 16 ausgebildet ist.

In Figur 2 ist der Mechanismus im Ausgangszustand gezeigt, in welchem sich der von ihm betätigte Deckel in der geschlossenen Stellung befindet. Der Führungsschlitten 18 ist über den Riegel 32 und die Aussparung 34 stationär in der Führungsschiene 14 arretiert. Der Hubschlitten 16 befindet sich in einer in Fahrzeuglängsrichtung nach vorne vorgeschobenen Stellung, in welcher der Lösezapfen 24 am Deckelhalter 20 von der Lösekulisse 22 am unteren Ende der Führungskulisse 30 gehalten wird. Auf diese Weise ist der Lösezapfen 24 und somit das vordere Ende des Deckelhalters gegen eine Bewegung in der Fahrzeuglängsrichtung (nämlich von der Führungskulisse 30) und eine Bewegung in vertikaler Richtung (nämlich durch die Lösekulisse 22) gesichert. Auch am hinteren Ende des Hubschlittens 16 ist der Deckelhalter gegen eine Bewegung in vertikaler Richtung arretiert, nämlich mittels des Hubzapfens 28, der in den vorderen, oberen Abschnitt der Hubkulisse 26 eingreift.

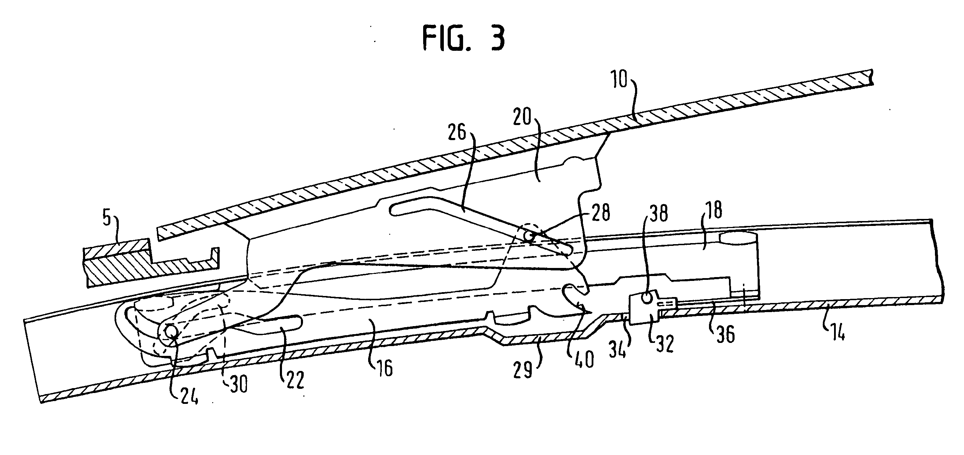

Wenn der Deckel geöffnet werden soll, wird der Hubschlitten in einem ersten Schritt um eine kleine Strecke nach hinten verstellt, also ausgehend von der in Figur 2 gezeigten Stellung nach rechts. Er erreicht dabei die in Figur 3 gezeigte Zwischenstellung. Diese Zwischenstellung zeichnet sich dadurch aus, daß der Deckel 10 im wesentlichen nur angehoben wurde, und zwar an seinem vorderen Rand geringfügig, so daß er sich von der Dachhaut 5 gelöst hat, und an seinem hinteren Ende sehr viel mehr, um beispielsweise über den zweiten Deckel hinübergleiten zu können oder um die Lüfterstellung einzunehmen. In der Zwischenstellung befindet sich der Lösezapfen 24 am Ende des mittleren Abschnittes der Lösekulisse 22; er wurde also gegenüber der Ausgangsstellung geringfügig angehoben. Dies führt zu einer geringfügigen Verschiebung des Deckelhalters 20 nach hinten, da der Lösezapfen 24 in der Führungskulisse 30 nach schräg oben und hinten gleitet. Der Hubzapfen 28 befindet sich im schräg verlaufenden Bereich der Hubkulisse 26. Der Führungsschlitten 18 verbleibt in der aus Figur 2 bekannten Ausgangsstellung.

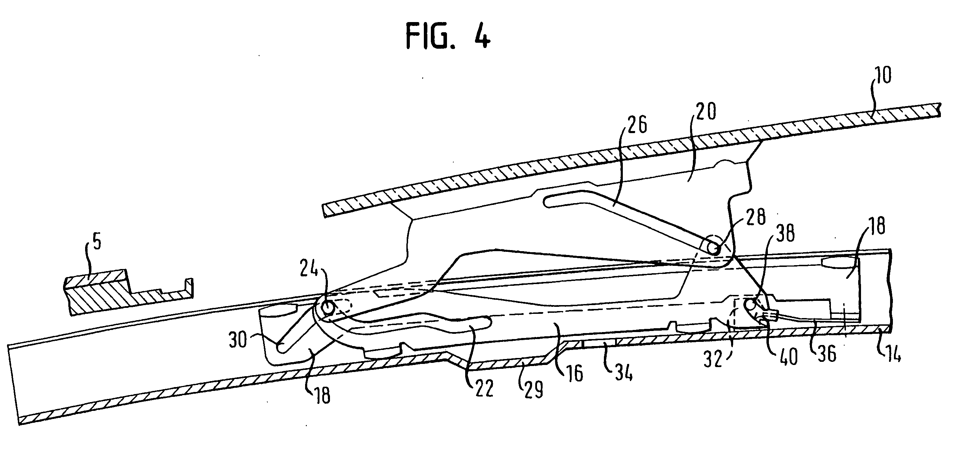

Wenn der Hubschlitten 16 weiter nach hinten in der Führungsschiene 14 verschoben wird, wird zuerst der Deckel 10 vollständig nach außen ausgestellt, also angehoben. Dies ist in Figur 4 zu sehen; der Lösezapfen 24 befindet sich im oberen Abschnitt sowohl der Lösekulisse 22 als auch der Führungskulisse 30, und der Hubzapfen 28 befindet sich am unteren Ende der Hubkulisse 26. Das Erreichen dieses Zustandes fällt in etwa mit dem Zeitpunkt zusammen, an dem der Hubschlitten 16 mit der Entriegelungskulisse 40 am Entriegelungszapfen 38 des Riegels 32 angreift und ihn nach oben aus der Aussparung 34 heraushebt. Somit ist der Führungsschlitten 18 in der Führungsschiene 14 verschiebbar, und er wird vom Hubschlitten 16 in der Führungsschiene 14 mitgenommen. Dieser Zustand ist in Figur 4 gezeigt. Der Deckel 10 kann nun bezüglich der Fahrzeuglängsrichtung nach hinten in die vollständig geöffnete Stellung überführt werden. Zum Schließen des Deckels wird der Hubschlitten 16 in der entgegengesetzten Richtung in der Führungsschiene 14 verschoben, also nach vorne. Dabei nimmt er über die Entriegelungskulisse 40, den Entriegelungszapfen 38, den Riegel 32 und die Blattfeder 36 den Führungsschlitten 18 mit, bis dieser wieder seine Ausgangsstellung erreicht hat, in welcher der Riegel 32 in die Aussparung 34 einrastet. Vor Erreichen der Ausgangsstellung kann der Riegel 32 nämlich nicht nach unten ausweichen, so daß er über den Entriegelungszapfen 38 in der Entriegelungskulisse 40 eingehakt bleibt. Sobald der Riegel 32 wieder in der Aussparung 34 verriegelt ist, kann der Deckel 10 durch weiteres Verschieben des Hubschlittens 16 nach vorne in der Führungsschiene 14 in seine geschlossene Stellung zurückgestellt werden.

Der beschriebene Mechanismus zeichnet sich durch einen einfachen Aufbau der Führungsschiene 14 aus. Es ist nicht erforderlich, in ihr Führungen für die Zapfen einer Kulissenführung auszubilden. Die entsprechenden Führungen sind ausschließlich in den vergleichsweise kurzen Bauteilen Hubschlitten, Führungsschlitten und Deckelhalter vorgesehen. Diese Bauteile können beispielsweise gestanzt oder spritzgegossen sein. Es ist auch zu sehen, daß die Führungsschiene 14 und damit der gesamte Mechanismus einen in vertikaler Richtung sehr kompakten Aufbau hat. Die über die Hubkulisse 26 erzielbare Hubbewegung ist größer als die Höhe der Führungsschiene 14 (mit Ausnahme im Bereich der Vertiefung 29).

### Bezugszeichenliste

- 3:: Fahrzeugdach
- 5:: Dachhaut
- 7:: Dachöffnung
- 10:: Deckel
- 12:: Deckel
- 14:: Führungsschiene
- 16:: Hubschlitten
- 18:: Führungsschlitten
- 20:: Deckelhalter
- 22:: Lösekulisse
- 24:: Lösezapfen
- 26:: Hubkulisse
- 28:: Hubzapfen
- 29:: Vertiefung
- 30:: Führungskulisse
- 32:: Riegel
- 34:: Aussparung
- 36:: Blattfeder
- 38:: Entriegelungszapfen
- 40:: Entriegelungskulisse

## Patentansprüche

1. Mechanismus für ein Schiebedach, mit mindestens einer Führungsschiene (14), einem Hubschlitten (16), der in der Führungsschiene (14) verschiebbar ist, einem Führungsschlitten (18), der in der Führungsschiene (14) in einer Ausgangsstellung arretierbar ist und nach Lösen der Arretierung in der Führungsschiene verschiebbar ist, und einem Deckelhalter (20), der mit dem Hubschlitten (16) und dem Führungsschlitten (18) so gekoppelt ist, daß er zwischen einer geschlossenen Stellung und einer geöffneten Stellung verstellbar ist, wobei der Führungsschlitten (18) und der Deckelhalter (20) durch eine Führungs-Kulissenführung miteinander verbunden sind.

2. Mechanismus nach Anspruch 1, **dadurch gekennzeichnet, daß** der Deckelhalter (20) und der Hubschlitten (16) durch eine Löse-Kulissenführungen miteinander verbunden sind.

3. Mechanismus nach Anspruch 2, **dadurch gekennzeichnet, daß** der Hubschlitten eine Lösekulisse (22) aufweist, in die ein Lösezapfen (24) am Deckelhalter (20) eingreift.

4. Mechanismus nach einem der vorhergehenden Ansprüche, **dadurch gekennzeichnet, daß** der Deckelhalter (20) und der Hubschlitten (16) durch eine Hub-Kulissenführungen miteinander verbunden sind.

5. Mechanismus nach Anspruch 4, **dadurch gekennzeichnet, daß** der Deckelhalter eine Hubkulisse (26) aufweist, in die ein Hubzapfen (28) am Hubschlitten (16) eingreift.

6. Mechanismus nach Anspruch 5, **dadurch gekennzeichnet, daß** die Führungsschiene (14) eine Vertiefung (29) aufweist, in die der Bereich des unteren Endes des Deckelhalters (20) eintauchen kann, in dem die Hubkulisse (26) endet.

7. Mechanismus nach einem der vorhergehenden Ansprüche, **dadurch gekennzeichnet, daß** der Führungsschlitten (18) eine Führungskulisse (30) aufweist, in die ein Führungszapfen am Deckelhalter (20) eingreift.

8. Mechanismus nach Anspruch 3 und Anspruch 7, **dadurch gekennzeichnet, daß** der Führungszapfen und der Lösezapfen ein und derselbe Zapfen (24) sind.

9. Mechanismus nach einem der vorhergehenden Ansprüche, **dadurch gekennzeichnet, daß** der Führungsschlitten (18) mit einem Riegel (32) versehen ist, der in eine Aussparung (34) in der Führungsschiene (14) einrasten kann.

10. Mechanismus nach Anspruch 9, **dadurch gekennzeichnet, daß** der Hubschlitten (16) mit einer Entriegelungskulisse (40) versehen ist, die am Riegel (32) angreifen kann.

11. Mechanismus nach Anspruch 9 oder Anspruch 10, **dadurch gekennzeichnet, daß** der Riegel (32) einen Entriegelungszapfen (38) aufweist, an dem der Hubschlitten (16) angreifen kann.

12. Mechanismus nach einem der Ansprüche 9 bis 11, **dadurch gekennzeichnet, daß** der Riegel (32) eine Blattfeder (36) aufweist, mittels der er am Führungsschlitten (18) angebracht ist und die ihn zur Aussparung (34) hin beaufschlagt.

## Claims

1. Mechanism for a sliding roof, with at least one guide rail (14), a lifting slide (16) which can be displaced in the guide rail (14), a guide slide (18) which can be locked in the guide rail (14) in an initial position and, after the locking is released, can be displaced in the guide rail, and a cover holder (20) which is coupled to the lifting slide (16) and the guide slide (18) in such a manner that it can be displaced between a closed position and an open position, wherein the guide slide (18) and the cover holder (20) are connected to each other by a guiding slotted-guide mechanism.

2. Mechanism according to Claim 1, **characterized in that** the cover holder (20) and the lifting slide (16) are connected to each other by a releasing slotted-guide mechanism.

3. Mechanism according to Claim 2, **characterized in that** the lifting slide has a release slot (22) in which a release pin (24) on the cover holder (20) engages.

4. Mechanism according to one of the preceding claims, **characterized in that** the cover holder (20) and the lifting slide (16) are connected to each other by a lifting slotted-guide mechanism.

5. Mechanism according to Claim 4, **characterized in that** the cover holder has a lifting slot (26) in which a lifting pin (28) on the lifting slide engages.

6. Mechanism according to Claim 5, **characterized in that** the guide rail (14) has a depression (29) into which that region of the lower end of the cover holder (20) in which the lifting slot (26) ends can tip.

7. Mechanism according to one of the preceding claims, **characterized in that** the guide slide (18) has a guide slot (30) in which a guide pin on the cover holder (20) engages.

8. Mechanism according to Claim 3 and Claim 7, **characterized in that** the guide pin and the release pin are one and the same pin (24).

9. Mechanism according to one of the preceding claims, **characterized in that** the guide slide (18) is provided with a latch (32) which can latch into a cut-out (34) in the guide rail (14).

10. Mechanism according to Claim 9, **characterized in that** the lifting slide (16) is provided with an unlocking slot (40) which can act on the latch (32).

11. Mechanism according to Claim 9 or Claim 10, **characterized in that** the latch (32) has an unlocking pin (38) on which the lifting slide (16) can act.

12. Mechanism according to one of Claims 9 to 11, **characterized in that** the latch (32) has a leaf spring (36) by means of which it is attached to the guide slide (18) and which urges it towards the cut-out (34).

## Revendications

1. Mécanisme pour un toit coulissant, comprenant au moins un rail de guidage (14), un chariot de levage (16), qui peut coulisser dans le rail de guidage (14), un chariot de guidage (18), qui peut être bloqué dans le rail de guidage (14) dans une position de départ et qui peut coulisser dans le rail de guidage après le desserrage du blocage, et un dispositif de fixation de couvercle (20) qui est accouplé au chariot de levage (16) et au chariot de guidage (18) de telle sorte qu'il puisse coulisser entre une position fermée et une position ouverte, le chariot de guidage (18) et le dispositif de fixation de couvercle (20) étant connectés l'un à l'autre par un guidage à coulisse de guidage.

2. Mécanisme selon la revendication 1, **caractérisé en ce que** le dispositif de fixation de couvercle (20) et le chariot de levage (16) sont connectés l'un à l'autre par un guidage à coulisse libre.

3. Mécanisme selon la revendication 2, **caractérisé en ce que** le chariot de levage présente une coulisse libre (22) dans laquelle vient en prise un tourillon libre (24) sur le dispositif de fixation de couvercle (20).

4. Mécanisme selon l'une quelconque des revendications précédentes, **caractérisé en ce que** le dispositif de fixation de couvercle (20) et le chariot de levage (16) sont connectés l'un à l'autre par un guidage à coulisse de levage.

5. Mécanisme selon la revendication 4, **caractérisé en ce que** le dispositif de fixation de couvercle présente une coulisse de levage (26), dans laquelle vient en prise un tourillon de levage (28) sur le chariot de levage (16).

6. Mécanisme selon la revendication 5, **caractérisé en ce que** le rail de guidage (14) présente un renfoncement (29) dans lequel peut s'enfoncer la région de l'extrémité inférieure du dispositif de fixation de couvercle (20) dans lequel se termine la coulisse de levage (26).

7. Mécanisme selon l'une quelconque des revendications précédentes, **caractérisé en ce que** le chariot de guidage (18) présente une coulisse de guidage (30) dans laquelle vient en prise un tourillon de guidage sur le dispositif de fixation de couvercle (20).

8. Mécanisme selon la revendication 3 et la revendication 7, **caractérisé en ce que** le tourillon de guidage et le tourillon libre forment un seul et même tourillon (24).

9. Mécanisme selon l'une quelconque des revendications précédentes, **caractérisé en ce que** le chariot de guidage (18) est pourvu d'un verrou (32), qui peut s'encliqueter dans un évidement (34) dans le rail de guidage (14).

10. Mécanisme selon la revendication 9, **caractérisé en ce que** le chariot de levage (16) est pourvu d'une coulisse de déverrouillage (40) qui peut s'engager avec le verrou (32).

11. Mécanisme selon la revendication 9 ou la revendication 10, **caractérisé en ce que** le verrou (32) présente un tourillon de déverrouillage (38) avec lequel peut s'engager le chariot de levage (16).

12. Mécanisme selon l'une quelconque des revendications 9 à 11, **caractérisé en ce que** le verrou (32) présente un ressort à lames (36) au moyen duquel il est monté sur le chariot de guidage (18) et qui le sollicite en direction de l'évidement (34).
